# EUROPÄISCHE PATENTANMELDUNG

(11) **EP 4 796 800 A1**
(43) Veröffentlichungstag der Anmeldung: **26.08.2026**
(21) Anmeldenummer: 26158767.9
(22) Anmeldetag: 16.02.2026
(51) Int. Cl.: F16B 37/12, F16B 37/04, F16B 13/08, F16B 5/02, F16B 35/04

(54) **SCHRAUBENAUFNAHME, HOHLRAUMDÜBEL UND ANORDNUNG**

(30) Priorität: 20.02.2025 DE 102025106379
(71) Anmelder: Adolf Würth GmbH & Co. KG, 74653 Künzelsau (DE)
(72) Erfinder: YIMGA, Junior Ekue, 74653 Künzelsau (DE); WIELAND, Achim, 74211 Leingarten (DE)
(74) Vertreter: Patentanwälte Ruff, Wilhelm, Beier, Dauster & Partner mbB

(57) **Zusammenfassung**

Die Erfindung betrifft eine Schraubenaufnahme zum Befestigen eines Bauteils mit einem Außengewinde, insbesondere einer Schraube, mit einem Grundkörper, wobei der Grundkörper eine Bohrung aufweist, wobei eine wenigstens abschnittsweise in der Bohrung angeordnete Schraubenfeder vorgesehen ist und wobei eine Mittellängsachse der Bohrung und eine Mittellängsachse der Schraubenfeder parallel zueinander angeordnet sind, wobei die Schraubenfeder wenigstens an einem Ende mit dem Grundkörper verbunden ist und wobei die Schraubenfeder wenigstens über einen Abschnitt ihrer Länge nicht an einer Wand der Bohrung anliegt.

## Beschreibung

Die Erfindung betrifft eine Schraubenaufnahme zum Befestigen eines Bauteils mit Außengewinde, insbesondere einer Schraube, mit einem Grundkörper, wobei der Grundkörper eine Bohrung aufweist. Die Erfindung betrifft auch einen Hohlraumdübel mit einer erfindungsgemäßen Schraubenaufnahme. Die Erfindung betrifft weiter eine Anordnung mit einem erfindungsgemäßen Hohlraumdübel, einer Hohlraumwand mit einer Durchgangsbohrung und einer Schraube.

Mit der Erfindung sollen eine Schraubenaufnahme, ein Hohlraumdübel sowie eine Anordnung mit einem Hohlraumdübel, einer Hohlraumwand und einer Schraube dahingehend verbessert werden, dass Schrauben mit unterschiedlichen Gewinden und unterschiedlichen Durchmessern verwendet werden können.

Erfindungsgemäß ist hierzu eine Schraubenaufnahme mit den Merkmalen von Anspruch 1, ein Hohlraumdübel mit den Merkmalen von Anspruch 5 sowie eine Anordnung mit den Merkmalen von Anspruch 13 vorgesehen. Vorteilhafte Weiterbildungen der Erfindung sind in den jeweiligen Unteransprüchen genannt.

Eine Schraubenaufnahme zum Befestigen eines Bauteils mit Außengewinde, insbesondere einer Schraube, weist einen Grundkörper auf, wobei der Grundkörper eine Bohrung aufweist, wobei eine wenigstens abschnittsweise in der Bohrung angeordnete Schraubenfeder vorgesehen ist und wobei eine Mittellängsachse der Bohrung und eine Mittellängsachse der Schraubenfeder parallel zueinander angeordnet sind, wobei die Schraubenfeder wenigstens an einem Ende mit dem Grundkörper verbunden ist und wobei die Schraubenfeder wenigstens über einen Abschnitt ihrer Länge nicht an einer Wand der Bohrung anliegt.

Der Grundkörper besteht beispielsweise aus Kunststoff, insbesondere aus glasfaserverstärktem Kunststoff, oder Metall und die Schraubenfeder ist aus Metall hergestellt, insbesondere aus Federstahl. Die Schraubenfeder besteht vorteilhafterweise aus im Querschnitt kreisförmigem oder im Querschnitt quadratischem, allgemein rechteckigem, Draht und ist dadurch kostengünstig herstellbar. Bei im Querschnitt rechteckigen oder quadratischen Draht kann sich die eckige oder scharfe Kante des Drahts in das Gewinde der Schraube und/oder in den Grundkörper einschneiden oder eindrücken. Erfindungsgemäß liegt die Schraubenfeder dann, wenn noch keine Schraube in die Schraubenfeder der Schraubenaufnahme eingedreht ist, wenigstens über einen Abschnitt ihrer Länge nicht an einer Wand der Bohrung an. Auf diese Weise können Schrauben mit unterschiedlichem Durchmesser in die Schraubenaufnahme und damit in die Schraubenfeder eingedreht werden. Indem die Schraubenfeder wenigstens an einem Ende fest mit dem Grundkörper verbunden ist, können mit der Schraubenaufnahme auch dann, wenn die Schraubenfeder mit der darin eingedrehten Schraube nicht oder lediglich über einen Teil ihrer Länge an einer Innenwand der Bohrung im Grundkörper anliegt, Kräfte, insbesondere Zugkräfte zwischen der Schraube und der Schraubenaufnahme übertragen werden. Die Schraube wird in die Schraubenfeder eingedreht beziehungsweise eingeschraubt. Je nach Durchmesser der Schraube wird die Schraubenfeder durch die eingedrehte Schraube so weit aufgeweitet, dass sie an einer Innenwand der Bohrung im Grundkörper anliegt und insbesondere wird die Schraubenfeder mittels der Schraube gegen die Innenwand der Bohrung des Grundkörpers gepresst. Ist der Außenumfang der Schraube kleiner, so greift das Gewinde der Schraube in die Schraubenfeder ein und es können dadurch Kräfte, insbesondere Zugkräfte zwischen der Schraube und der Schraubenfeder und zwischen der Schraubenfeder und dem Grundkörper übertragen werden, ohne dass die Schraubenfeder an der Innenwand der Bohrung anliegt. Es können dabei Schrauben mit unterschiedlichem Gewinde verwendet werden, beispielsweise Maschinengewinde, insbesondere metrische Gewinde, oder Holzgewinde oder Blechgewinde. Die Schraubenfeder passt sich durch ihre Elastizität an das Gewinde der in die Schraubenfeder eingedrehten Schraube an. Die Schraubenaufnahme kann wenigstens abschnittsweise als Gewindebuchse ausgebildet sein.

In Weiterbildung der Erfindung verjüngt sich die Schraubenfeder wenigstens abschnittsweise in einer Richtung vom Beginn zum Ende der Bohrung.

Auf diese Weise können Schrauben mit vergleichsweise großen Durchmesserunterschieden, insbesondere mit einem Durchmesserunterschied bis zu 2 mm, insbesondere bis zu 1 mm, in die Schraubenaufnahme eingeschraubt werden. Bei Schrauben mit kleinem Durchmesser greift das Gewinde der Schrauben lediglich in dem verjüngten Abschnitt der Schraubenfeder ein. Bei Schrauben mit größerem Durchmesser greift das Gewinde der Schraube über die gesamte Länge der Schraubenfeder in diese ein und der verjüngte Abschnitt der Schraubenfeder wird stärker aufgeweitet.

In Weiterbildung der Erfindung ist eine Wand der Bohrung wenigstens abschnittsweise mit in Umfangsrichtung umlaufenden Rillen oder wenigstens einer nach Art eines Innengewindes umlaufenden Rille versehen, wobei die Rillen bzw. die Rille so ausgebildet und angeordnet sind, dass die Windungen der Schraubenfeder wenigstens abschnittsweise in die Rillen bzw. die Rille eingreifen können.

Auf diese Weise kann eine verbesserte Kraftübertragung zwischen der Schraube, der Schraubenfeder und dem Grundkörper der Schraubenaufnahme erzielt werden. Wenn die Schraubenfeder wenigstens abschnittsweise in die Rillen bzw. die Rille eingreift, können wesentlich höhere Kräfte zwischen der Schraubenfeder und dem Grundkörper übertragen werden als bei einer glatten Ausbildung der Wand der Bohrung.

**In** Weiterbildung der Erfindung ist die Bohrung als Sacklochbohrung ausgebildet.

Beispielsweise kann die Bohrung einseitig mit einer Membran oder einer dünnen Kunststofflage verschlossen sein, die von einer Schraube beim Einschrauben durchstoßen werden kann. Beim Eindrehen der Schraube in die Schraubenfeder kann dadurch die Schraubenfeder nicht aus der Bohrung im Grundkörper herausgedrückt werden, sondern der Grund der Sacklochbohrung verhindert eine Verschiebung der Schraubenfeder über das Ende der Sacklochbohrung hinaus, so dass die Schraube die Schraubenfeder aufweiten und insbesondere gegen die Wand der Bohrung pressen kann.

Die der Erfindung zugrunde liegende Aufgabe wird auch durch einen Hohlraumdübel mit einer erfindungsgemäßen Schraubenaufnahme gelöst, wobei ein Auflageteil zum Anliegen an einer Innenseite einer Hohlraumwand vorgesehen ist, wobei das Auflageteil mit der Schraubenaufnahme verbunden ist, wobei eine Bundhülse zum Anliegen an einer Außenseite der Hohlraumwand vorgesehen ist und wobei ein flexibles Zugband vorgesehen ist, das die Schraubenaufnahme und die Bundhülse verbindet.

Zum Montieren eines solchen Hohlraumdübels wird zunächst die Schraubenaufnahme mit dem daran befestigten Auflageteil durch eine ausreichend große Bohrung in der Hohlraumwand geschoben. Zweckmäßigerweise wird das Auflageteil hierzu in Längsrichtung durch die Bohrung geschoben und erst nachdem das Auflageteil die Bohrung vollständig durchquert hat, wird das Auflageteil wieder in eine zur Mittellängsachse der Bohrung senkrechte Position gekippt. Das Auflageteil und/oder die Schraubenaufnahme sind dabei mit einem Zugband verbunden, das auch dann, wenn die Schraubenaufnahme und das Auflageteil vollständig durch die Bohrung hindurchgeschoben sind, noch an der Eingangsöffnung der Bohrung an der Außenseite der Hohlraumwand zugänglich ist. Die Bundhülse ist ebenfalls mit dem Zugband verbunden. Der Bund der Bundhülse weist einen größeren Durchmesser auf als der Durchmesser der Bohrung, so dass die Bundhülse nicht durch die Bohrung hindurchgezogen werden kann, sondern an der Außenseite der Hohlraumwand verbleibt. Wenn die Schraubenaufnahme zusammen mit dem Auflageteil vollständig durch die Bohrung hindurchgeschoben ist, wird die Schraubenaufnahme zusammen mit dem Auflageteil durch Zug an dem Zugband in eine senkrecht zur Mittellängsachse der Bohrung ausgerichtete Position gebracht, in der auch das Auflageteil an der Innenseite der Hohlraumwand anliegt. Gleichzeitig oder danach kann der Bund der Bundhülse in Anlage an die Außenseite der Hohlraumwand gebracht werden. Die Bundhülse hat vorteilhafterweise Stege, die in die Wand der Bohrung eindringen und dadurch die Bundhülse am Beginn der Bohrung fixieren können. Das Zugband ist flexibel, so dass das Auflageteil und die Schraubenaufnahme in einem mit dem Zugband verbundenen Zustand verkippt werden können. Vorteilhafterweise ist das Zugband aber so stabil bzw. kann so große Federkräfte aufbringen, dass das Auflageteil mit der Schraubenaufnahme dann, wenn es mit der Schraubenaufnahme vollständig durch die Bohrung geschoben wurde, automatisch in eine senkrechte Position zur Bohrung gekippt wird, so dass sich das Auflageteil an die Innenseite der Hohlraumwand anlegen kann. Das Auflageteil kann aus Kunststoff oder Stahl ausgebildet sein. Das Zugband ist einerseits durch eine Durchgangsöffnung im Bund der Bundhülse geführt und andererseits an der Schraubenaufnahme und/oder am Auflageteil befestigt.

In Weiterbildung der Erfindung ist das Auflageteil in Form eines U-förmigen Profils mit einer Basis und zwei sich von der Basis weg erstreckenden Schenkeln ausgebildet, wobei die Schraubenaufnahme sich durch eine Durchgangsbohrung in der Basis des Auflageteils hindurcherstreckt.

In Weiterbildung der Erfindung sind die freien Kanten der Schenkel des Auflageteils mit wenigstens einem Vorsprung versehen.

Auf diese Weise können sich die Vorsprünge in die Hohlraumwand eingraben, um die Schraubenaufnahme und das Auflageteil zu fixieren.

In Weiterbildung der Erfindung ist der Grundkörper mit wenigstens zwei einander gegenüberliegenden und von dem Grundkörper ausgehenden Lagerzapfen versehen, die in passende Bohrungen in den Schenkeln des Auflageteils eingreifen.

Auf diese Weise kann die Schraubenaufnahme in das Auflageteil eingerastet werden. Auf diese Weise können der beispielsweise aus Kunststoff bestehende Grundkörper und das beispielsweise aus Metall bestehende Auflageteil sicher und schnell miteinander verbunden werden.

In Weiterbildung der Erfindung ist das Zugband an einem Ende mit einer Scheibe mit einer Durchgangsöffnung versehen, die auf einer Eingangsseite oder Ausgangsseite der Schraubenaufnahme aufliegt und zugfest mit der Schraubenaufnahme verbunden ist.

In Weiterbildung der Erfindung weist die Bundhülse einen in radialer Richtung abragenden Bund auf, der mit einer Durchgangsöffnung versehen ist, wobei sich das Zugband durch die Durchgangsöffnung hindurcherstreckt.

Das Zugband kann dadurch in sehr einfacher Weise gespannt werden, indem das Zugband mit einer Hand ergriffen wird und mit der anderen Hand die Bundhülse gegen die Außenseite der Hohlraumwand gedrückt wird.

In Weiterbildung der Erfindung sind das Zugband und/oder die Bundhülse im Bereich der Durchgangsöffnung mit Rastelementen versehen.

Auf diese Weise kann das Zugband gespannt und im gespannten Zustand an der Bundhülse verrastet werden. Die Rastelemente an der Bundhülse am Zugband können beispielsweise sägezahnartig oder auch ähnlich wie bei einem Kabelbinder ausgebildet sein.

In Weiterbildung der Erfindung ermöglicht das flexible Zugband ein Verkippen des Auflageteils und der Schraubenaufnahme relativ zur Bundhülse.

Auf diese Weise können das Auflageteil und die mit dem Auflageteil verbundene Schraubenaufnahme relativ zum Zugband verkippt und in die Durchgangsbohrung der Hohlraumwand eingeschoben werden. Gleichzeitig ermöglicht das flexible Zugband aber auch ein automatisches Zurückkippen des Auflageteils in die zur Durchgangsbohrung senkrechte Position, wenn das Auflageteil und die Schraubenaufnahme vollständig durch die Bohrung der Hohlraumwand durchgeschoben wurden. Die Elastizität und das Material des Zugbands können ähnlich wie bei handelsüblichen Kabelbindern ausgebildet sein.

Bei einer Anordnung mit einem erfindungsgemäßen Hohlraumdübel, einer Hohlraumwand mit einer Durchgangsbohrung und einer Schraube ist die Schraubenaufnahme mit dem Auflageteil verbunden, das Auflageteil liegt an einer Innenseite der Hohlraumwand an und die Bundhülse liegt an einer Außenseite der Hohlraumwand an, wobei die Schraube sich durch die Bundhülse und die Schraubenfeder erstreckt und ein Gewinde der Schraube zwischen Windungen der Schraubenfeder eingreift.

Auf diese Weise kann die Schraube sicher in der Schraubenaufnahme und damit in der Hohlraumwand verankert werden. Die Schraubenfeder ermöglicht die Befestigung von Schrauben mit unterschiedlichem Gewinde sowie auch mit unterschiedlichem Durchmesser in der Schraubenaufnahme. Beispielsweise können Schrauben mit Holzgewinde oder Blechgewinde oder auch Schrauben mit Maschinengewinde, insbesondere mit metrischem Gewinde, verwendet werden.

In Weiterbildung der Erfindung spannt vor dem Eindrehen der Schraube das Zugband das Auflageteil gegen die Innenseite der Hohlraumwand vor und das Zugband spannt den Bund der Bundhülse gegen die Außenseite der Hohlraumwand vor.

Schon vor dem Eindrehen der Schraube ist der Hohlraumdübel dadurch zuverlässig an der Hohlraumwand fixiert. Auch nach dem Eindrehen der Schraube bleibt die Verbindung zwischen Schraubenaufnahme und Auflageteil einerseits und der Bundhülse andererseits durch das Zugband bestehen. Die Schraube kann infolgedessen auch wieder ausgedreht werden, ohne dass zu befürchten ist, dass die Schraubenaufnahme und das Auflageteil von der Hohlraumwand abfallen und/oder die Bundhülse aus der Bohrung herausfällt.

In Weiterbildung der Erfindung greift das Gewinde der Schraube zwischen Windungen der Schraubenfeder ein und die Windungen der Schraubenfeder werden mittels der Schraube wenigstens teilweise gegen die Wand der Bohrung im Grundkörper vorgespannt.

Auf diese Weise kann die Schraube besonders zugstabil in der Schraubenaufnahme verankert werden. Im Rahmen der Erfindung ist es aber nicht unbedingt erforderlich, dass die Schraubenfeder gegen die Wand der Bohrung im Grundkörper vorgespannt wird. Auch dann, wenn die Schraube nur in die Schraubenfeder eingreift, können bereits Zugkräfte zwischen der Schraube und der an mindestens einem Ende fest mit der Schraubenaufnahme verbundenen Schraubfeder übertragen werden.

In Weiterbildung der Erfindung ist die Wand der Bohrung wenigstens abschnittsweise mit in Umfangsrichtung umlaufenden Rillen oder wenigstens einer nach Art eines Innengewindes umlaufenden Rille versehen, wobei die Windungen der Schraubenfeder mittels der Schraube wenigstens teilweise in die Rillen oder die Rille eingedrückt sind.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine isometrische Ansicht eines erfindungsgemäßen Hohlraumdübels,
- Fig. 2: eine Seitenansicht des Hohlraumdübels der Fig. 1,
- Fig. 3: eine Draufsicht auf den Hohlraumdübel der Fig. 1,
- Fig. 4: eine Ansicht auf die Schnittebene B-B in Fig. 2,
- Fig. 5: die vergrößerte Einzelheit C aus Fig. 4,
- Fig. 6: eine erste Seitenansicht einer Anordnung mit dem Hohlraumdübel der Fig. 1 und einer Hohlraumwand,
- Fig. 7: eine zweite Seitenansicht der Anordnung der Fig. 6 aus einem anderen Betrachtungswinkel,
- Fig. 8: eine weitere Seitenansicht der Anordnung der Fig. 6,
- Fig. 9: eine Ansicht auf die Schnittebene D-D in Fig. 7,
- Fig. 10: eine Vorderansicht eines Zugbands des Hohlraumdübels der Fig. 1,
- Fig. 11: eine Seitenansicht des Zugbands der Fig. 10,
- Fig. 12: eine Draufsicht auf das Zugband der Fig. 10,
- Fig. 13: die Einzelheit D aus Fig. 11,
- Fig. 14: das Zugband der Fig. 10 in einer Ansicht von schräg oben,
- Fig. 15: die Einzelheit E aus Fig. 14,
- Fig. 16: eine Seitenansicht einer erfindungsgemäßen Schraubenaufnahme,
- Fig. 17: eine Draufsicht auf die Schraubenaufnahme der Fig. 16,
- Fig. 18: eine Ansicht auf die Schnittebene A-A in Fig. 16,
- Fig. 19: eine Ansicht auf die Schraubenaufnahme der Fig. 16 von schräg oben,
- Fig. 20: eine Ansicht auf die Schraubenaufnahme der Fig. 16 von schräg unten,
- Fig. 21: eine Ansicht des Auflageteils des Hohlraumdübels der Fig. 1 von unten,
- Fig. 22: eine Seitenansicht des Auflageteils der Fig. 21,
- Fig. 23: eine Draufsicht auf das Auflageteil der Fig. 21,
- Fig. 24: eine weitere Seitenansicht des Auflageteils der Fig. 21 unter anderem Blickwinkel als in Fig. 22,
- Fig. 25: eine Ansicht des Auflageteils der Fig. 21 von schräg oben,
- Fig. 26: eine Draufsicht auf die Bundhülse des Hohlraumdübels der Fig. 1,
- Fig. 27: eine Seitenansicht der Bundhülse der Fig. 26,
- Fig. 28: eine Ansicht der Bundhülse der Fig. 26 von schräg oben und
- Fig. 29: eine Ansicht der Bundhülse der Fig. 26 von schräg unten.

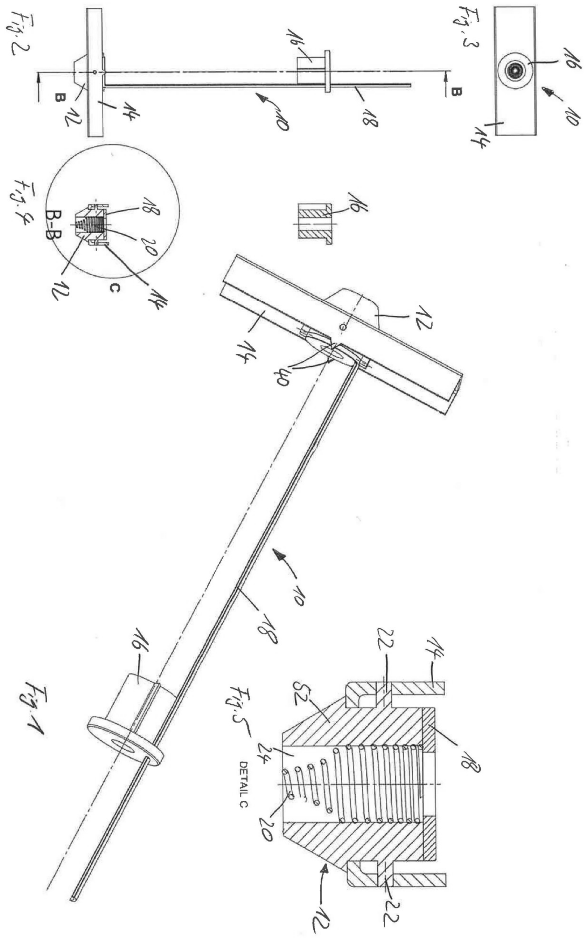

Fig. 1 zeigt einen Hohlraumdübel 10 mit einer Schraubenaufnahme 12, einem Auflageteil 14, das mit der Schraubenaufnahme 12 verbunden ist, einer Bundhülse 16 und einem Zugband 18, das die Schraubenaufnahme 12 und die Bundhülse 16 verbindet.

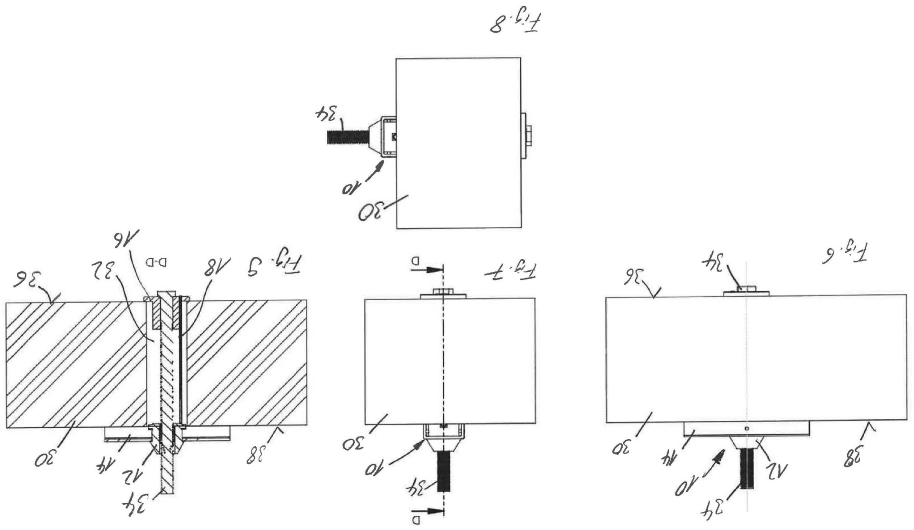

Der Hohlraumdübel 10 ist zur Befestigung an einer Wand, insbesondere einer Hohlraumwand, vorgesehen. Im montierten Zustand, vgl. die Fig. 6 bis 9, ist die Bundhülse 16 an der Außenseite der Wand am Eingang einer Durchgangsbohrung durch die Wand angeordnet, das Zugband erstreckt sich durch die Bohrung in der Wand hindurch und die Schraubenaufnahme 12 und das Auflageteil 14 liegen an einer Innenseite der Wand an. Mittels des Zugbands 10 kann das Auflageteil 14 und die Schraubenaufnahme 12 gegen die Innenseite der Wand gezogen werden. Das Zugband ist durch eine Durchgangsöffnung im Bund der Bundhülse 16 geführt und im Bereich dieser Durchgangsöffnung oder an der Bundhülse sind Rastmittel vorgesehen, um das Zugband 18 im gespannten Zustand zu halten. Mittels des Zugbands 18 können infolgedessen die Bundhülse 16 gegen die Außenseite der Wand und das Auflageteil 14 mit der daran befestigten Schraubenaufnahme 12 gegen die Innenseite der Wand vorgespannt werden. Auch ohne eingedrehte Schraube ist der Hohlraumdübel 10 dadurch sicher an der Wand befestigt.

Wenn der Hohlraumdübel 10 in der geschilderten Art und Weise an einer Hohlraumwand angebracht ist, vgl. wieder die Fig. 6 bis 8, kann eine Schraube durch die Bundhülse 16 und durch die Durchgangsbohrung in der Wand gesteckt und dann in die Schraubenaufnahme 12 eingeschraubt werden. Dabei können Schrauben mit unterschiedlichem Durchmesser und/oder unterschiedlichen Gewinden eingesetzt werden, wie nachfolgend noch erläutert wird. Der erfindungsgemäße Hohlraumdübel 10 ist dadurch für Schrauben unterschiedlicher Art und mit unterschiedlichem Durchmesser geeignet. Wenn die Schraube, vgl. die Fig. 6 bis 9, in den Hohlraumdübel eingesteckt und in die Schraubenaufnahme 12 eingeschraubt ist, kann die Schraube festgezogen werden. Eine durch die Schraube ausgeübte Zugkraft drückt dann einerseits den Bund der Bundhülse 16 gegen die Außenseite der Wand und das Auflageteil 14 gegen die Innenseite der Wand. Die Schraube beziehungsweise ein mit der Schraube verbundener Gegenstand kann dadurch sicher an der Wand verankert werden.

Dabei muss die Innenseite der Wand nicht zugänglich sein. Das Zugband 18 ist ausreichend flexibel, um das Auflageteil 14 und die Schraubenaufnahme 12 relativ zum Zugband 18 verkippen zu können, um die Schraubenaufnahme 12 mit dem daran befestigten Auflageteil 14 in Längsrichtung durch die Durchgangsbohrung in der Wand durchschieben zu können. Das Zugband 18 verbiegt sich dabei, stellt aber auch während des Durchschiebens der Schraubenaufnahme 12 und des Auflageteils 14 durch die Durchgangsbohrung eine Verbindung mit der Bundhülse 16 sicher. Sobald die Schraubenaufnahme 12 und das Auflageteil 14 vollständig durch die Durchgangsbohrung in der Wand durchgeschoben sind, sorgt eine Federwirkung des Zugbands 18 dafür, dass das Auflageteil 14 mit der daran befestigten Schraubenaufnahme 12 wieder eine zum Zugband 18 senkrechte Position einnimmt, wie diese in Fig. 1 gezeigt ist. Im Rahmen der Erfindung kann das Zugband 18 auch biegeschlaff ausgebildet sein. Ein leichter Zug am Zugband sorgt dann dafür, dass sich das Auflageteil 14 an die Innenwand der Hohlraumwand anlegt und die in den Fig. 6 bis 9 dargestellte Position einnimmt.

Wenn das Auflageteil 14 an der Innenseite der Wand anliegt und die Schraubenaufnahme 12 fluchtend zu der Durchgangsbohrung in der Wand ausgerichtet ist, wird das Zugband 18 mit einer Hand straff gehalten und mit der anderen Hand kann die Bundhülse 16 entlang des Zugbandes 18 in Richtung auf die Außenseite der Wand verschoben werden. Manuell oder unter Zuhilfenahme eines Werkzeugs wird dann die Bundhülse 16 so weit in die Bohrung in der Wand eingedrückt, bis der Bund der Bundhülse 16 auf der Außenseite der Wand aufliegt, vgl. wieder die Fig. 6 bis 9.

In diesem Zustand ist der Hohlraumdübel 10 dann montiert und relativ zur Wand fixiert. Eine Schraube kann dann durch die Bundhülse 16 und die Bohrung in der Wand durchgesteckt und in die Schraubenaufnahme 12 eingeschraubt werden und umgekehrt auch wieder aus der Schraubenaufnahme ausgeschraubt und entfernt werden.

Fig. 2 zeigt eine Seitenansicht des Hohlraumdübels 10 und Fig. 3 eine Draufsicht auf den Hohlraumdübel 10. Die Schraubenaufnahme 12 ist in der Draufsicht der Fig. 3 durch das Auflageteil 14 und die Bundhülse 16 verdeckt.

Fig. 4 zeigt eine Ansicht auf die Schnittebene B-B in Fig. 2. Zu erkennen ist die Bundhülse 16 sowie die Schraubenaufnahme 12 und das Auflageteil 14. Die Schraubenaufnahme 12 weist eine Durchgangsbohrung auf, in der eine Schraubenfeder 20 angeordnet ist. Die Schraubenfeder 20 beginnt an dem in Fig. 4 oben gelegenen Ende der Bohrung in der Schraubenaufnahme 12 und erstreckt sich dann zunächst zylindrisch nach unten. Etwa im letzten Drittel der Länge der Schraubenfeder 20 und der Länge der Durchgangsbohrung in der Schraubenaufnahme 12 verjüngt sich die Schraubenfeder 20.

Das Zugband 18 ist in der Ansicht der Fig. 4 nur abschnittsweise zu erkennen. Speziell ist lediglich das auf der Schraubenaufnahme 12 aufliegende Ende des Zugbands 18 zu erkennen, das ringförmig nach Art einer Unterlegscheibe ausgebildet ist. Der in Fig. 2 zu erkennende bandförmige Abschnitt des Zugbands 18 ist mit dem ringförmigen Ende an dessen Außenumfang verbunden. Das Zugband 18 ist vorteilhafterweise einstückig als Kunststoffteil, insbesondere Kunststoffspritzgussteil, ausgebildet.

Fig. 5 zeigt die Einzelheit C aus Fig. 4 in vergrößertem Maßstab. Die Schraubenaufnahme 12 ist mit zwei seitlich abragenden Rastzapfen 22 versehen. Jeder der Rastzapfen greift in eine passende Bohrung in jeweils einem Schenkel des U-förmigen Auflageteils 14 ein. Die Schraubenaufnahme 12 ist dadurch an dem Auflageteil 14 gesichert und Vorspannkräfte können zuverlässig von der Schraubenaufnahme 12 auf das Auflageteil 14 und dann in die Wand übertragen werden.

In der Bohrung 24 der Schraubenaufnahme ist die Schraubenfeder 20 angeordnet. Wie bereits ausgeführt wurde, ist die Schraubenfeder 20 über etwa zwei Drittel ihrer Länge zylindrisch ausgebildet und verjüngt sich dann im Verlauf ihres letzten Drittels bis zum freien Ende, das in Fig. 5 unten dargestellt ist.

Auf der in Fig. 5 oben liegenden Oberseite des Grundkörpers der Schraubenaufnahme 12 liegt das ringförmige Ende des Zugbands 18 auf.

Die Schraubenfeder 20 ermöglicht es, Schrauben mit unterschiedlichem Gewinde und unterschiedlichem Außendurchmesser in der Schraubenaufnahme 12 zu fixieren. Das Gewinde einer Schraube wird in den Innenraum der Schraubenfeder 20 eingeschraubt und presst gegebenenfalls die Windungen der Schraubenfeder gegen die Wand der Durchgangsbohrung 24 im Grundkörper der Schraubenaufnahme 12. Die Wand der Bohrung 24 kann mit einer umlaufenden Rille in Form eines Innengewindes versehen sein oder auch mit mehreren, senkrecht zur Mittellängsachse der Bohrung 24 angeordneten umlaufenden Rillen. Wird die Schraubenfeder 20 durch eine eingedrehte Schraube gegen die Wand der Bohrung 24 gepresst, greifen die Windungen der Schraubenfeder 20 wenigstens abschnittsweise in die Rille oder die Rillen an der Wand der Bohrung 24 ein und sorgen dadurch für eine noch zuverlässigere Kraftübertragung zwischen der Schraube und der Schraubenaufnahme 12.

Wenn die in die Schraubenaufnahme 12 eingeschraubte Schraube einen Außendurchmesser hat, der kleiner ist als der Innendurchmesser der Schraubenfeder 20 in ihrem zylindrischen Bereich, greift die Schraube erst in dem sich verjüngenden Abschnitt der Schraubenfeder 20 an der Schraubenfeder an. Das in Fig. 5 obere Ende der Schraubenfeder 20 ist in geeigneter Weise fest mit dem Grundkörper der Schraubenaufnahme 12 verbunden. Auch wenn also die Schraube lediglich in den sich verjüngenden Abschnitt der Schraubenfeder 20 an der Schraubenfeder angreift, können dennoch über die Schraubenfeder Kräfte von der Schraube in den Grundkörper der Schraubenaufnahme 12 übertragen werden.

Die Schraubenaufnahme 12 ist infolgedessen für das Einschrauben von Schrauben mit unterschiedlichem Gewinde, beispielsweise Schrauben mit Blechgewinde, Holzgewinde oder Maschinengewinde, geeignet und auch für Schrauben mit unterschiedlichem Durchmesser geeignet. Die Schraubenaufnahme 12 ist dadurch äußerst flexibel einsetzbar. Insbesondere auf einer Baustelle kann die Schraubenaufnahme 12 und auch der Hohlraumdübel 10 mit unterschiedlichen Schrauben eingesetzt werden. Dies erleichtert die Vorratshaltung auf der Baustelle.

Im Rahmen der Erfindung kann die Schraubenfeder 20 auch über ihre gesamte Länge zylindrisch ausgebildet sein. Die Schraubenfeder ist dann so zu bemessen, dass auch Schrauben mit dem vorgesehenen kleinsten Durchmesser an der Schraubenfeder angreifen und diese wenigstens geringfügig aufweiten. Schrauben mit größerem Durchmesser pressen dann die Schraubenfeder, wie erörtert wurde, gegen die Wand der Bohrung 24. Die feste Verankerung wenigstens eines Endes der Schraubenfeder an dem Grundkörper ermöglicht es aber, Schrauben in der Schraubenaufnahme 12 zu befestigen, ohne dass die Windungen der Schraubenfeder radial nach außen gegen die Wand der Bohrung 24 gedrückt werden.

Die Fig. 6 bis 9 zeigen verschiedene Ansichten einer Anordnung mit einer Wand 30, einem Hohlraumdübel 10, der in einer Durchgangsbohrung 32 in der Wand 30 angeordnet ist, und einer Schraube 34, die in den Hohlraumdübel eingeschraubt ist.

In der Ansicht der Fig. 6 ist ein Abschnitt einer Wand 30 in Form eines quaderförmigen Blocks dargestellt. Die Wand 30 wird von einer Durchgangsbohrung 32 durchsetzt, siehe Fig. 9. Die Durchgangsbohrung 32 ist in der Ansicht der Fig. 6 nicht zu erkennen.

Die Wand 30 ist lediglich von ihrer Außenseite 36 her zugänglich. Eine gegenüberliegende Innenseite 38 der Wand ist nicht zugänglich. Beispielsweise trennt die Wand 30 einen Hohlraum ab, der sich dann in Fig. 6 ausgehend von der Innenseite 38 erstreckt.

Um den Hohlraumdübel 10 zu montieren, wird, wie bereits erläutert wurde, zunächst ohne dass die Schraube 34 in die Schraubenaufnahme 12 eingeschraubt ist das Auflageteil 14 mit der daran verrasteten Schraubenaufnahme 12 parallel zur Durchgangsbohrung 32 ausgerichtet, vgl. Fig. 9, und vollständig durch die Durchgangsbohrung 32 hindurchgeschoben. Sobald das Auflageteil 14 vollständig durch die Durchgangsbohrung 32 hindurchgeschoben ist, sich in der Darstellung der Fig. 6 und der Fig. 9 also oberhalb der Wand 30 befindet, sorgt die Elastizität und Federwirkung des Zugbands 18 dafür, dass das Auflageteil 14 zusammen mit der Schraubenaufnahme 12 wieder in eine zu der Durchgangsbohrung 32 senkrechte Position gekippt wird. Wenn das Zugband 18 biegeschlaff ausgebildet wird, dann sorgt ein Zug am Zugband 18 dafür, dass sich die Schraubenaufnahme 12 in die in Fig. 9 dargestellte Position, fluchtend zu der Durchgangsbohrung 32, bewegt und das Auflageteil 14 sich an die Innenseite 38 der Wand 30 anlegt.

In diesem Zustand wird der über die Außenseite 36 der Wand 30 hinausragende Abschnitt des Zugbands 18 mit einer Hand festgehalten und mit der anderen Hand oder mit einem Werkzeug wird dann die Bundhülse 16 von der Außenseite 36 der Wand 30 her in die Durchgangsbohrung 32 eingedrückt. Dabei greifen zwei sich radial nach außen erstreckende Rippen der Bundhülse 16 in die Wand der Durchgangsbohrung ein. Die Bundhülse 16 wird so weit in die Bohrung 32 eingedrückt, bis eine Unterseite des Bunds der Bundhülse 16 auf der Außenseite 36 der Wand 30 aufliegt und die in den Fig. 6 bis 9 dargestellte Position der Bundhülse 16 erreicht ist. In diesem Zustand ist der Hohlraumdübel 10 dann fertig montiert. Der über die Oberseite des Bunds der Bundhülse hinausstehende Abschnitt des Zugbands 18 kann abgeschnitten werden. Rastmittel an der Bundhülse 16 und an dem Zugband 18, die beispielsweise nach Art der Rastmittel an einem Kabelbinder ausgebildet sind, halten den Hohlraumdübel 10 dann in der Position an der Wand 30.

In diesem fertig montierten Zustand des Hohlraumdübels 10 kann dann die Schraube 34 in den Hohlraumdübel 10 eingeschraubt werden. Hierzu wird, siehe Fig. 9, zunächst ein mit einem Außengewinde versehener Schaft der Schraube 34 durch die Durchgangsbohrung der Bundhülse 16 gesteckt und weiter in die Durchgangsbohrung 32 eingeschoben, bis das freie Ende des Schafts der Schraube 34 an den Beginn der Durchgangsbohrung 24 der Schraubenaufnahme 12 gelangt, vgl. Fig. 5. Die Schraube kann nun in die Spiralfeder 20 der Schraubenaufnahme 12 eingeschraubt werden und drückt dabei wenigstens abschnittsweise die Schraubenfeder 20 radial nach außen gegen die Wand der Bohrung in dem Grundkörper der Schraubenaufnahme 12. Wie ausgeführt wurde, wird dadurch die Schraube 34 in axialer Richtung an der Schraubenaufnahme 12 gesichert. Beim Anziehen der Schraube drückt eine Unterseite des Kopfs der Schraube den Bund der Bundhülse 16 gegen die Außenseite 36 der Wand 30 und gleichzeitig wird das Auflageteil 14 gegen die Innenseite 38 der Wand 30 gezogen. Dabei graben sich Vorsprünge 40 an dem Auflageteil 14, vgl. Fig. 1, in die Innenseite 38 der Wand 30 ein. Dadurch wird beim eventuellen Lockern oder Entfernen der Schraube 34 ein Verrutschen des Auflageteils 14 relativ zur Wand 30 vermieden.

Wie ausgeführt wurde, kann anstelle der Schraube 34, die als Maschinenschraube mit beispielsweise metrischem Gewinde ausgebildet ist, auch eine Holzschraube oder Blechschraube in die Schraubenaufnahme 12 eingeschraubt werden. Die Schraubenfeder 20 sorgt dafür, dass das Gewinde der Schraube in jedem Fall zwischen die Windungen der Schraubenfeder 20 eingreifen kann, so dass Zugkräfte zwischen der Schraube und der Zugfeder 20 übertragen werden können.

Dies ist auch dann möglich, wenn die eingedrehte Schraube einen kleineren Durchmesser als die Schraube 34 in den Fig. 6 bis 9 aufweist. Selbst dann, wenn die Schraube nur in dem sich verjüngenden Abschnitt der Schraubenfeder 20 an der Schraubenfeder angreift, sorgt eine feste Verbindung wenigstens eines Endes der Schraubenfeder 20 mit dem Grundkörper der Schraubenaufnahme 12 dafür, dass Kräfte von der Schraube auf die Schraubenfeder und dann auf den Grundkörper der Schraubenaufnahme 12 übertragen werden können.

Der an der Wand 30 montierte Hohlraumdübel 10 kann dadurch in äußerst flexibler Weise mit Schrauben mit unterschiedlichem Durchmesser und/oder unterschiedlichem Gewinde verwendet werden.

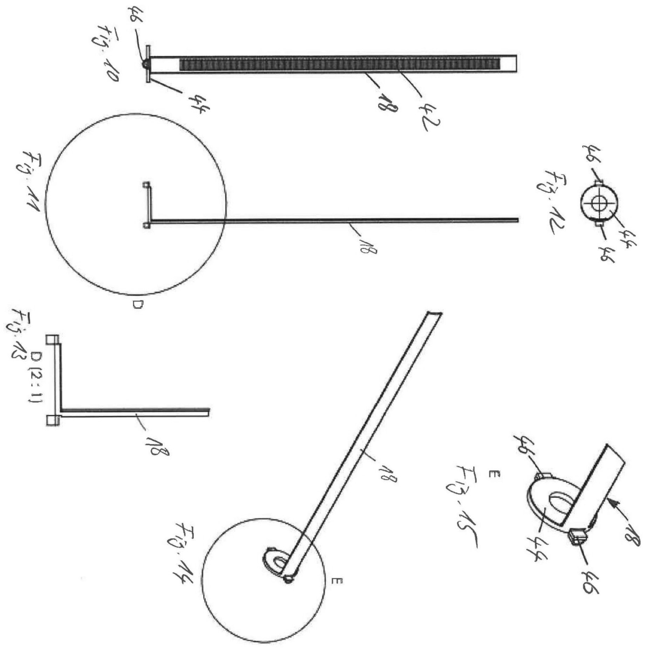

Die Fig. 10 bis 15 zeigen verschiedene Ansichten des Zugbands 18 des Hohlraumdübels 10 der Fig. 1. In Fig. 10 ist zu erkennen, dass der bandförmige, langgestreckte Abschnitt des Zugbands 18 mit Rastmitteln 42 versehen ist, wobei die Rastmittel 42 beispielsweise eine sägezahnartige Ausbildung aufweisen und vergleichbar zu den Rastmitteln an einem handelsüblichen Kabelbinder ausgebildet sind.

Weiter ist am unteren Ende des Zugbands 18 in Fig. 10 das ringförmige Ende 44 zu erkennen. Das ringförmige Ende 44 ist nach Art einer Unterlegscheibe ausgebildet, weist aber zwei einander gegenüberliegende und sich radial vom äußeren Rand des ringförmigen Endes aus nach außen erstreckende zapfenförmige Vorsprünge 46 auf. Diese beiden Vorsprünge sind beispielsweise gut in Fig. 12 und Fig. 15 zu erkennen. Das ringförmige Ende 44 ist mit einer Durchgangsbohrung versehen, durch die die Schraube 34, vgl. die Fig. 6 bis 9, durchgesteckt oder eingeschraubt werden kann.

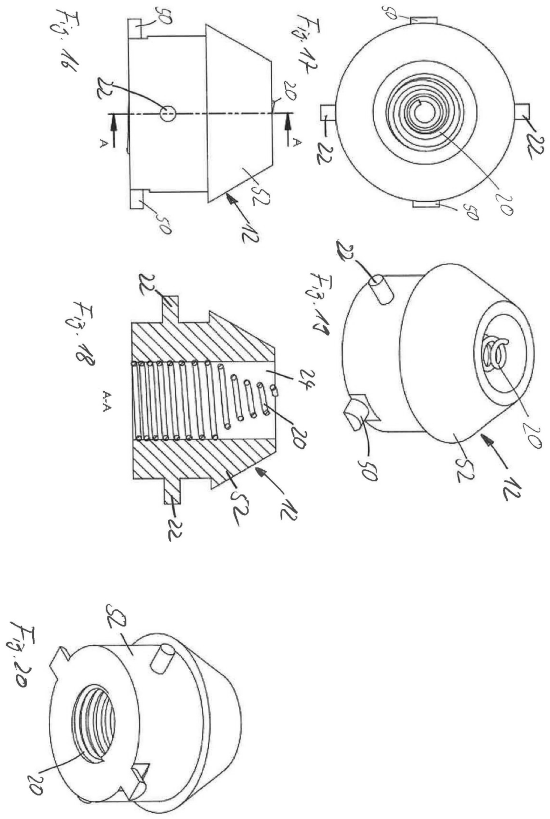

Die Vorsprünge 46 fluchten im montierten Zustand mit symmetrisch, gleich oder passend zu den Vorsprüngen 46 ausgebildeten Vorsprüngen 50 am Grundkörper 52 der Schraubenaufnahme 12, vgl. beispielsweise Fig. 19. Die Vorsprünge 46 an dem Zugband 18 und die Vorsprünge 50 am Grundkörper 52 der Schraubenaufnahme 12 sind jeweils in Form eines Halbkreiszylinders ausgebildet. Wenn das ringförmige Ende 44 korrekt auf der Oberseite der Schraubenaufnahme 12 positioniert ist, vgl. die Fig. 1 bis 5, liegt eine Unterseite des ringförmigen Endes 44 flächig auf der Oberseite des Grundkörpers 52 der Schraubenaufnahme 12 auf und die halbkreisförmigen Außenflächen der Vorsprünge 46 liegen entweder auf den planen Seitenflächen der Vorsprünge 50 auf oder sind neben den Vorsprüngen 50 angeordnet. Die Vorsprünge 46 können dann beispielsweise erhitzt und mit den Vorsprüngen 50 verschweißt werden, beispielsweise durch Ultraschallverschweißung, alternativ kann das ringförmige Ende 44 und/oder die Vorsprünge 46 des Zugbands 18 auch mit der Oberseite des Grundkörpers 52 der Schraubenaufnahme 12 verklebt oder verschweißt werden.

Die Vorsprünge 50 an dem Grundkörper 52 der Schraubenaufnahme 21 können beispielsweise auch rinnenförmig ausgebildet sein, so dass die abgerundeten Seitenflächen der Vorsprünge 46 des Zugbands 18 in die rinnenförmigen Vorsprünge 50 einrasten können und dadurch das Zugband 18 korrekt zum Grundkörper 52 der Schraubenaufnahme 12 positionieren. Über jeweils zwei Vorsprünge 46, 50 kann auch eine Hülse geschoben werden, um das Zugband 18 und die Schraubenaufnahme 12 miteinander zu verbinden.

Fig. 16 zeigt eine Seitenansicht der Schraubenaufnahme 12. Der Grundkörper 52 der Schraubenaufnahme 12 weist neben den Vorsprüngen 50 weiter zwei Rastzapfen 54 auf, die diametral zueinander angeordnet sind, vgl. Fig. 17, und die sich von einem zylindrischen Abschnitt des Grundkörpers 52 radial nach außen erstrecken. Die Rastzapfen 22 sind dafür vorgesehen, vgl. Fig. 5, in passende Ausnehmungen oder Durchgangsbohrungen in den Schenkeln des Auflageteils 14 einzugreifen und dadurch die Schraubenaufnahme 12 an dem Auflageteil 14 zu verrasten.

Die Schnittansicht der Fig. 18 zeigt die Anordnung der Schraubenfeder 20 in der Bohrung 24 im Grundkörper 52 der Schraubenaufnahme 12. In Fig. 18 nicht zu erkennen ist die feste Verbindung des in Fig. 18 unten liegenden Endes der Schraubenfeder 20 mit dem Grundkörper 52.

Fig. 20 zeigt den Grundkörper 52 und in der Ansicht der Fig. 20 ist zu erkennen, dass etwa die Hälfte der ersten Windung der Schraubenfeder 20 einen etwas größeren Durchmesser hat als der sich daran anschließende zylindrische Abschnitt der Schraubenfeder 20 und dass diese erste Hälfte der ersten Windung in einer passenden Ausnehmung in der Oberseite des Grundkörpers 52 aufgenommen und darin gesichert ist. Die Schraubenfeder kann beispielsweise mit dem Grundkörper 52 in diesem Bereich der ersten Hälfte der ersten Windung verklebt oder in sonstiger Weise kraftschlüssig oder formschlüssig mit dem Grundkörper 52 verbunden sein. Beispielsweise kann auch das Ende der Schraubenfeder 20 rechtwinklig nach außen abgebogen und in einer Bohrung im Grundkörper 52 verankert sein.

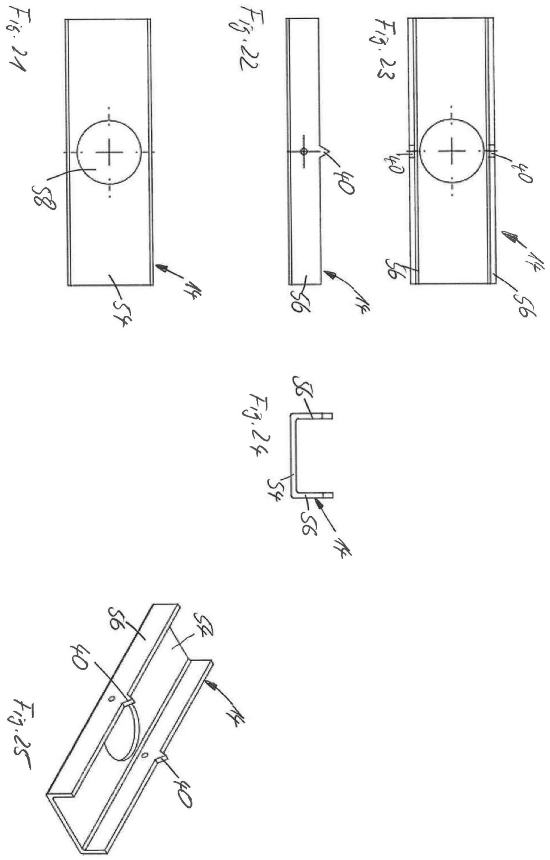

Fig. 21 zeigt eine Ansicht des Auflageteils 14 in einer Ansicht von unten. Das Auflageteil 14 weist, vgl. Fig. 1 und Fig. 24, eine Basis 54 und zwei senkrecht zu der Basis 54 angeordnete Schenkel 56 auf, so dass, siehe die Ansicht der Fig. 24, das Auflageteil 14 die Form eines U-förmigen Profils hat. In der Basis 54 ist, siehe Fig. 21, eine kreisrunde Durchgangsbohrung 58 vorgesehen. Der Innendurchmesser dieser Durchgangsbohrung 58 ist auf den Außendurchmesser des zylindrischen Abschnitts des Grundkörpers 52 der Schraubenaufnahme 12 abgestimmt, vgl. Fig. 5. Im montierten Zustand liegen die unmittelbar an die Durchgangsöffnung 58 angrenzenden Abschnitte der Basis 54 auf einer Schulter des Grundkörpers 52 auf, die zwischen dem zylindrischen Abschnitt des Grundkörpers 52 und einem sich kegelstumpfförmig verjüngenden Abschnitt des Grundkörpers 52 gebildet ist. In dieser Position wird das Auflageteil 14 durch die beiden Rastzapfen 22 gehalten, die in passende Durchgangsbohrungen in den beiden Schenkeln 56 des Auflageteils 14 eingerastet sind. In dem montierten Zustand der Fig. 5 ist das Auflageteil 14 dadurch relativ zum Grundkörper 52 der Schraubenaufnahme 12 fixiert.

Fig. 22 zeigt eine Seitenansicht des Auflageteils 14. Zu erkennen ist in dieser Ansicht ein Vorsprung 40, der von dem in Fig. 22 oberen Ende des dem Betrachter zugewandten Schenkels 56 ausgeht und eine der Durchgangsbohrungen zum Einrasten einer der Rastzapfen 22 der Schraubenaufnahme 12. Wie beispielsweise Fig. 25 zu entnehmen ist, ist jeder der beiden Schenkel 56 mit einem solchen Vorsprung 40 und mit einer solchen Durchgangsbohrung versehen. Die Vorsprünge 40 können sich im montierten Zustand in die Innenseite der Wand 30 eingraben, vgl. die Fig. 6 bis 9. Die Vorsprünge 40 haben beide eine Dreiecksform, wobei eine Spitze der Vorsprünge 40 der Basis 54 abgewandt ist.

Fig. 23 zeigt eine Ansicht des Auflageteils 14 von oben. In dieser Ansicht sind ebenfalls die beiden Vorsprünge 40 auf den freien Kanten der Schenkel 56 zu erkennen.

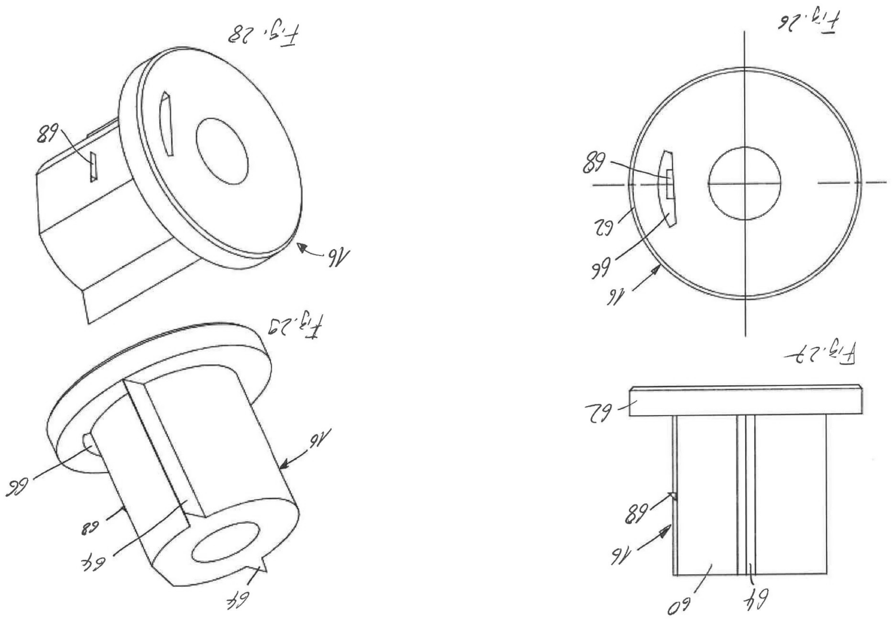

Die Fig. 26 bis 29 zeigen verschiedene Ansichten der Bundhülse 16, vgl. Fig. 1. Die Bundhülse 16 weist einen zylindrischen Grundkörper 60 und einen sich in radialer Richtung über den Grundkörper 60 hinauserstreckenden Bund 62 auf. Am Grundkörper 60 sind zwei einander gegenüberliegende Rippen 64 mit jeweils dreieckförmigem Querschnitt angeordnet. Die Rippen 64 sind dafür vorgesehen, in die Innenwand der Bohrung in der Wand 30 einzugreifen, vgl. Fig. 9.

Der Bund 62 ist mit einer Durchgangsöffnung 66 versehen, die dafür vorgesehen ist, den bandförmigen Abschnitt des Zugbands 18 einzustecken, vgl. Fig. 1. In Fig. 26 sind durch die Durchgangsöffnung 66 hindurch Rastmittel 68 in Form eines Rastvorsprungs zu erkennen. Der Rastvorsprung ist dafür vorgesehen, in die Rastmittel 42 am Zugband 18 einzugreifen, vgl. Fig. 10. Die Rastmittel 68 an der Bundhülse 16 und die Rastmittel 42 am Zugband 18 sind, wie bereits ausgeführt wurde, beispielsweise ähnlich zu den Rastmitteln an einem handelsüblichen Kabelbinder ausgebildet.

Wenn das Zugband 18 durch die Durchgangsöffnung 66 geführt ist, kann, vgl. Fig. 1, die Bundhülse 16 noch in Richtung auf die Schraubenaufnahme 12 und das Anlageteil 14 verschoben werden, in umgekehrter Richtung sind die Rastmittel 42, 68 aber so ausgebildet, dass ein Abstand zwischen der Bundhülse 16 und der Schraubenaufnahme 12 sowie dem Anlageteil 14 nicht mehr vergrößert werden kann.

Die erfindungsgemäße Schraubenaufnahme 12 ermöglicht es, Schrauben mit unterschiedlichem Außendurchmesser und/oder unterschiedlichem Gewinde zu verankern. Dies wird durch die Schraubenfeder 20 der Schraubenaufnahme 12 ermöglicht. Der Hohlraumdübel 10 ist infolgedessen dafür geeignet, mit unterschiedlichen Schrauben zusammen verwendet zu werden. Dies erlaubt einen flexiblen Einsatz des Hohlraumdübels 10 und insbesondere kann eine Vorratshaltung auf einer Baustelle wesentlich vereinfacht werden.

## Patentansprüche

1. Schraubenaufnahme zum Befestigen eines Bauteils mit Außengewinde, insbesondere einer Schraube, mit einem Grundkörper, wobei der Grundkörper eine Bohrung aufweist, wobei eine wenigstens abschnittsweise in der Bohrung angeordnete Schraubenfeder vorgesehen ist und wobei eine Mittelängsachse der Bohrung und eine Mittellängsachse der Schraubenfeder parallel zueinander angeordnet sind, wobei die Schraubenfeder wenigstens an einem Ende mit dem Grundkörper verbunden ist und wobei die Schraubenfeder wenigstens über einen Abschnitt ihrer Länge nicht an einer Wand der Bohrung anliegt.

2. Schraubenaufnahme nach Anspruch 1, **dadurch gekennzeichnet, dass** die Schraubenfeder sich wenigstens abschnittsweise in einer Richtung vom Beginn zum Ende der Bohrung verjüngt.

3. Schraubenaufnahme nach einem der vorstehenden Ansprüche, **dadurch gekennzeichnet, dass** eine Wand der Bohrung wenigstens abschnittsweise mit in Umfangsrichtung umlaufenden Rillen oder wenigstens einer nach Art eines Innengewindes umlaufenden Rille versehen ist, wobei die Rillen beziehungsweise die Rille so ausgebildet und angeordnet sind, dass die Windungen der Schraubenfeder wenigstens abschnittsweise in die Rillen beziehungsweise die Rille eingreifen können.

4. Schraubenaufnahme nach einem der vorstehenden Ansprüche, **dadurch gekennzeichnet, dass** die Bohrung als Sacklochbohrung ausgebildet ist.

5. Hohlraumdübel mit einer Schraubenaufnahme nach wenigstens einem der vorstehenden Ansprüche, mit einem Auflageteil zum Anliegen an einer Innenseite einer Hohlraumwand, das mit der Schraubenaufnahme verbunden ist, einer Bundhülse zum Anliegen an einer Außenseite der Hohlraumwand und einem flexiblen Zugband, das die Schraubenaufnahme und die Bundhülse verbindet.

6. Hohlraumdübel nach Anspruch 5, **dadurch gekennzeichnet, dass** das Auflageteil in Form eines u-förmigen Profils mit einer Basis und zwei sich von der Basis weg erstreckenden Schenkeln ausgebildet ist, wobei die Schraubenaufnahme sich durch eine Durchgangsbohrung in der Basis des Auflageteils hindurch erstreckt.

7. Hohlraumdübel nach Anspruch 6, **dadurch gekennzeichnet, dass** die freien Kanten der Schenkel des Auflageteils mit jeweils wenigstens einem Vorsprung versehen sind.

8. Hohlraumdübel nach Anspruch 5 oder 6, **dadurch gekennzeichnet, dass** der Grundkörper mit wenigstens zwei einander gegenüberliegenden und von dem Grundkörper ausgehenden Lagerzapfen versehen ist, die in passende Bohrungen in den Schenkeln des Auflageteils eingreifen.

9. Hohlraumdübel nach einem der Ansprüche 5 bis 8, **dadurch gekennzeichnet, dass** das Zugband an einem Ende mit einer Scheibe mit einer Durchgangsöffnung versehen ist, die auf einer Eingangsseite der Schraubenaufnahme aufliegt und zugfest mit der Schraubenaufnahme verbunden ist.

10. Hohlraumdübel nach einem der Ansprüche 5 bis 9, **dadurch gekennzeichnet, dass** die Bundhülse einen in radialer Richtung abragenden Bund aufweist, der mit einer Durchgangsöffnung versehen ist, wobei sich das Zugband durch die Durchgangsöffnung hindurcherstreckt.

11. Hohlraumdübel nach Anspruch 10, **dadurch gekennzeichnet, dass** das Zugband und/oder die Bundhülse im Bereich der Durchgangsöffnung mit Rastelementen versehen sind.

12. Hohlraumdübel nach einem der Ansprüche 5 bis 11, **dadurch gekennzeichnet, dass** das flexible Zugband ein Verkippen des Auflageteils und der Schraubenaufnahme relativ zur Bundhülse ermöglicht.

13. Anordnung mit einer Hohlraumdübel nach wenigstens einem der Ansprüche 5 bis 12, einer Hohlraumwand mit einer Durchgangsbohrung und einer Schraube, wobei die Schraubenaufnahme mit dem Auflageteil verbunden ist, wobei das Auflageteil an einer Innenseite der Hohlraumwand anliegt, wobei die Bundhülse an einer Außenseite der Hohlraumwand anliegt und wobei die Schraube sich durch die Bundhülse und die Schraubenfeder erstreckt und ein Gewinde der Schraube zwischen Windungen der Schraubenfeder eingreift, wobei insbesondere vor dem Eindrehen der Schraube das Zugband das Auflageteil gegen die Innenseite der Hohlraumwand und den Bund der Bundhülse gegen die Außenseite der Hohlraumwand vorspannt.

14. Anordnung nach Anspruch 12 oder 13, **dadurch gekennzeichnet, dass** das Gewinde der Schraube zwischen Windungen der Schraubenfeder eingreift und die Windungen der Schraubenfeder mittels der Schraube wenigstens teilweise gegen die Wand der Bohrung im Grundkörper vorgespannt sind.

15. Anordnung nach Anspruch 14, **dadurch gekennzeichnet, dass** die Wand der Bohrung wenigstens abschnittsweise mit in Umfangsrichtung umlaufenden Rillen oder wenigstens einer nach Art eines Innengewindes umlaufenden Rille versehen ist, wobei die Windungen der Schraubenfeder mittels der Schraube wenigstens teilweise in die Rillen oder die Rille eingedrückt sind.
